# EUROPÄISCHE PATENTANMELDUNG

(11) **EP 1 559 890 A2**
(43) Veröffentlichungstag der Anmeldung: **03.08.2005**
(21) Anmeldenummer: 04024229.9
(22) Anmeldetag: 12.10.2004
(51) Int. Cl.: F02D 41/00, F02B 37/12, F02D 23/00

(54) **Verfahren zum Betreiben einer Brennkraftmaschine mit einem Abgasturbolader**

(30) Priorität: 28.01.2004 DE 102004004171
(71) Anmelder: ROBERT BOSCH GMBH, 70442 Stuttgart (DE)
(72) Erfinder: Herz, Klaus, 74223 Flein (DE); Frauenkron, Helge, 51399 Burscheid (DE)

(57) **Zusammenfassung**

Es wird ein Verfahren zum Betreiben einer Brennkraftmaschine (1) mit einem Abgasturbolader (5, 10,15) vorgeschlagen, das einen optimierten Ladedruckaufbau ermöglicht. Dabei wird ein Stellglied (20) zur Beeinflussung des von einem Verdichter (10) des Abgasturboladers (5, 10,15) erzeugten Ladedruckes angesteuert. Ein Verlauf eines Ansteuersignals des Stellgliedes (20) wird abhängig von der Zeit vorgegeben.

## Beschreibung

### Stand der Technik

Die Erfindung geht von einem Verfahren zum Betreiben einer Brennkraftmaschine mit einem Abgasturbolader nach der Gattung des Hauptanspruches aus.

Verfahren zum Betreiben einer Brennkraftmaschine mit Abgasturbolader sind bereits bekannt. Dabei wird ein Stellglied zur Beeinflussung des von einem Verdichter des Abgasturboladers erzeugten Ladedruckes angesteuert. Bei diesem Stellglied handelt es sich üblicherweise um ein Bypassventil in einem Bypass, der die Turbine des Abgasturboladers oder den Verdichter des Abgasturboladers umgeht. Bei dem Stellglied kann es sich aber auch um ein Stellglied zur Variierung der Geometrie der Turbine des Abgasturboladers handeln.

Um die Leistung der Brennkraftmaschine deutlich zu steigern, werden derzeit weit verbreitet Abgasturbolader mit einer solchen variablen Turbinengeometrie eingesetzt. Durch die veränderbare Turbinegeometrie lässt sich insbesondere das Ansprechverhalten bei einem positiven Lastwechsel, d. h. einem Lastwechsel hin zu einer größeren Last wie es beispielsweise bei einem Anfahrvorgang der Fall ist, gegenüber herkömmlichen Abgasturboladern mit Bypassventil verbessern.

Bei der Motorenentwicklung ist man bestrebt, diesen Vorteil gegenüber einem herkömmlichen - Abgasturbolader mit Bypassventil auch auf Ottomotoren zu übertragen. Bislang sind noch keine Abgasturbolader mit variabler Turbinengeometrie in Ottomotoren im Serieneinsatz.

Die derzeit verwendeten Abgasturbolader mit Bypassventil haben allgemein konzeptbedingt den Nachteil, dass Sie mit der starren Geometrie der Turbine gleichzeitig alle Anforderungen an die Höhe des einzustellenden Ladedruckes und an das Ansprechverhalten in den verschiedenen durch Drehzahl und Last definierten Betriebspunkten der Brennkraftmaschine erfüllen müssen. Dies ist derzeit nur durch einen Kompromiss zwischen dem einzustellenden Ladedruck und dem Ansprechverhalten möglich.

Bei den Abgasturboladern mit variabler Turbinengeometrie liegt die Problematik im Gegensatz zum Abgasturbolader mit Bypassventil in der optimalen Ansteuerung der variablen Turbinegeometrie. Diese ist komplexer als bei einer Ansteuerung eines Bypassventils und erfordert eine neue Herangehensweise, um das optimale Leistungspotenzial des Abgasturboladers mit variabler Turbinegeometrie zu nutzen.

### Vorteile der Erfindung

Das erfindungsgemäße Verfahren zum Betreiben einer Brennkraftmaschine mit einem Abgasturbolader mit den Merkmalen des Hauptanspruches hat demgegenüber den Vorteil, dass ein Verlauf eines Ansteuersignals zur Ansteuerung der Stellgliedes abhängig von der Zeit vorgegeben wird. Auf diese Weise kann der Ladedruckaufbau und damit das Ansprechverhalten des Abgasturboladers durch eine geeignete zeitliche Vorgabe des Ansteuersignals wesentlich verbessert werden.

Durch die in den Unteransprüchen aufgeführten Maßnahmen sind vorteilhafte Weiterbildungen und Verbesserungen des im Hauptanspruch angegebenen Verfahrens möglich.

Besonders vorteilhaft ist es, wenn der zeitliche Verlauf des Ansteuersignals abhängig von einem Betriebspunkt der Brennkraftmaschine vorgegeben wird. Auf diese Weise lässt sich der Ladedruckaufbau und damit das Ansprechverhalten des Abgasturboladers auch betriebspunktabhängig optimieren.

Ein weiterer Vorteil ergibt sich, wenn der Stellglied direkt durch das Ansteuersignal mit dem vorgegebenen zeitlichen Verlauf angesteuert wird. Auf diese Weise lässt sich eine dynamische Vorsteuerung des Ladedruckaufbaus realisieren.

Ein weiterer Vorteil ergibt sich, wenn der Stellglied vom Ausgangssignal eines Reglers, insbesondere zur Regelung des Ladedruckes, angesteuert wird und das Ausgangssignal des Reglers durch den zeitlichen Verlauf des Ansteuersignals beeinflusst wird. Auf diese Weise lässt sich das Ansteuersignal zur Erzielung eines optimierten Ladedruckaufbaus in eine bestehende Reglerstruktur integrieren. Somit kann das Ausgangssignal des Reglers im Hinblick auf einen optimierten Ladedruckaufbau durch das Ansteuersignal angepasst werden.

Dies kann im einfachsten Fall dadurch geschehen, dass das Ausgangssignal des Reglers durch den zeitlichen Verlauf des Ansteuersignals begrenzt wird.

Eine ebenfalls einfache und zuverlässige Anpassung des Ausgangssignals des Reglers im Hinblick auf einen optimierten Ladedruckaufbau mit Hilfe des Ansteuersignals kann auch dadurch erfolgen, dass das Ausgangssignal des Reglers durch einen vorgegebenen Bereich um den zeitlichen Verlauf des Ansteuersignals begrenzt wird.

Vorteilhaft ist weiterhin, wenn der Stellglied von dem Ansteuersignal und zusätzlich von dem Ausgangssignal des Reglers und/oder von dem Signal einer Vorsteuerung angesteuert wird. Auf diese Weise lassen sich ebenfalls verschiedene Anforderungen im Hinblick auf das Ansprechverhalten des Abgasturboladers und auf den einzustellenden Ladedruck miteinander in Einklang bringen.

Dies lässt sich besonders einfach dadurch realisieren, dass das Ansteuersignal und zusätzlich das Ausgangssignal des Reglers und/oder das Signal der Vorsteuerung zum Ansteuern des Stellgliedes überlagert werden. Auf diese Weise lassen sich die Vorteile der gegebenenfalls verwendeten Regelung im Hinblick auf das Ausgleichen von unerwünschten Schwankungen des Istwertes des Ladedruckes mit den Vorteilen eines schnellen Ansprechverhaltens des Abgasturboladers durch dynamische Vorsteuerung mittels des Ansteuersignals und gegebenenfalls durch stationäre Vorsteuerung kombinieren.

Ein besonders differenzierter Ladedruckaufbau lässt sich erreichen, wenn die Signale gewichtet überlagert werden.

Besonders vorteilhaft ist dabei, wenn die Gewichtung zeitlich verändert wird. Auf diese Weise lässt sich der Einfluss der verschiedenen Signale auf die Einstellung des Ladedruckes auch über der Zeit verändern und damit der Ladedruckaufbau noch besser an die verschiedenen Anforderungen hinsichtlich des Ansprechverhaltens des Abgasturboladers und des einzustellenden Ladedruckes anpassen.

### Zeichnung

Ausführungsbeispiele der Erfindung sind in der Zeichnung dargestellt und in der nachfolgenden Beschreibung näher erläutert. Es zeigen Figur 1 ein Blockschaltbild einer Brennkraftmaschine, Figur 2 ein Blockschaltbild eines Kennfeldes zur Ermittlung eines Ansteuersignals zur Ansteuerung eines Stellgliedes eines Abgasturboladers, Figur 3 einen zeitlichen Verlauf des Ansteuersignals, Fig. 4 ein Blockschaltbild bzw. ein Funktionsdiagramm einer ersten Ausführungsform zur Ermittlung eines resultierenden Ansteuersignals für das Stellglied, Figur 5 ein Funktionsdiagramm einer zweiten Ausführungsform zur Ermittlung eines resultierenden Ansteuersignals für das Stellglied und Fig. 6 ein Funktionsdiagramm einer dritten Ausführungsform zur Ermittlung eines resultierenden Ansteuersignals für das Stellglied.

### Beschreibung der Ausführungsbeispiele

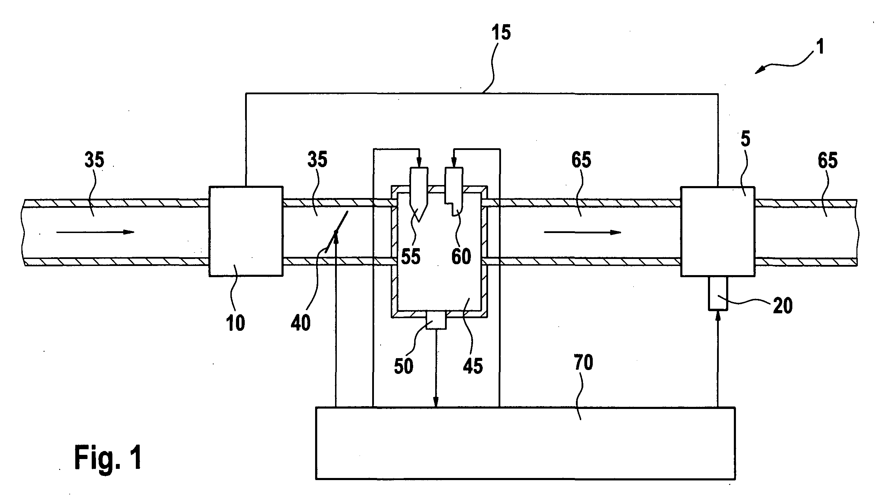

In Figur 1 kennzeichnet 1 eine Brennkraftmaschine. Die Brennkraftmaschine 1 treibt beispielsweise ein Fahrzeug an. Die Brennkraftmaschine 1 umfasst dabei einen Verbrennungsmotor 45. Der Verbrennungsmotor 45 kann bspw. als Ottomotor oder als Dieselmotor ausgebildet sein. Im Folgenden soll beispielhaft angenommen werden, dass der Verbrennungsmotor 45 als Ottomotor ausgebildet ist. Dem Ottomotor 45 ist über eine Luftzufuhr 35 Frischluft zugeführt. In der Luftzufuhr 35 ist ein Verdichter 10 eines Abgasturboladers angeordnet, der die dem Ottomotor 45 zugeführte Frischluft verdichtet. Die Strömungsrichtung der Frischluft in der Luftzufuhr 35 ist in Figur 1 durch einen Pfeil gekennzeichnet. Dem Verdichter 10 in Strömungsrichtung der Frischluft nachfolgend in der Luftzufuhr 35 angeordnet ist eine Drosselklappe 40, deren Öffnungsgrad von einer Motorsteuerung 70 angesteuert wird. Diese Ansteuerung erfolgt in dem Fachmann bekannter Weise beispielsweise derart, um ein an einem Fahrpedal vorgegebenes Fahrerwunschmoment umzusetzen. In einen Brennraum des Ottomotors 45 wird über ein Einspritzventil 55 Kraftstoff direkt eingespritzt. Alternativ kann die Einspritzung von Kraftstoff auch in den zwischen der Drosselklappe 40 und einem in Figur 1 nicht dargestellten Einlassventil des Ottomotors 45 als Saugrohr bezeichneten Abschnitt der Luftzufuhr 35 erfolgen. Die Einspritzmenge und/oder die Einspritzzeit des Einspritzventils 55 wird ebenfalls von der Motorsteuerung 70 in dem Fachmann bekannter Weise vorgegeben, beispielsweise um einen vorgegebenen Sauerstoffgehalt im Abgas bzw. einen vorgegebenen Lambdawert einzuhalten. Das im Brennraum des Ottomotors 45 gebildete Luft-/Kraftstoffgemisch wird von einer Zündkerze 60 gezündet. Dabei wird der Zündzeitpunkt der Zündkerze 60 ebenfalls von der Motorsteuerung 70 in dem Fachmann bekannter Weise angesteuert, beispielsweise um einen optimalen Wirkungsgrad der Verbrennung einzustellen. Das Beispiel nach Figur 1 zeigt der Übersichtlichkeit halber einen einzylindrigen Ottomotor, der Ottomotor 45 kann jedoch genauso gut entsprechend mehrzylindrig ausgebildet sein. Das bei der Verbrennung des Luft-/Kraftstoffgemisches im Brennraum des Ottomotors 45 gebildete Abgas wird in einen Abgasstrang 65 ausgestoßen. Die Strömungsrichtung des Abgases im Abgasstrang 65 ist in Figur 1 ebenfalls durch einen Pfeil gekennzeichnet. Im Abgasstrang 65 ist eine Turbine 5 des Abgasturboladers angeordnet, die vom Abgasmassenstrom im Abgasstrang 65 angetrieben wird und ihrerseits über eine Welle 15 des Abgasturboladers den Verdichter 10 zur Verdichtung der dem Ottomotor 45 über die Luftzufuhr 35 zugeführten Frischluft antreibt. Im Bereich des Ottomotors 45 ist ein Drehzahlsensor 50 angeordnet, der die Drehzahl des Ottomotors 45 in dem Fachmann bekannter Weise erfasst und das Messergebnis an die Motorsteuerung 70 weiterleitet. Weiterhin ist ein Stellglied 20 vorgesehen, das von der Motorsteuerung 70 zur Beeinflussung des vom Verdichter 10 des Abgasturboladers erzeugten Ladedruckes in Strömungsrichtung der Frischluft dem Verdichter 10 nachfolgend angesteuert wird. Bei dem Stellglied 20 kann es sich beispielsweise um ein Bypassventil in einem die Turbine 5 des Abgasturboladers umgehenden Bypass handeln. In diesem Beispiel soll jedoch angenommen werden, dass das Stellglied 20 eine variable Geometrie der Turbine 5 je nach Ansteuerung durch die Motorsteuerung 70 verändert. Sowohl die Verwendung eines Bypassventils als auch die Verwendung eines Stellgliedes zu Veränderung der variablen Geometrie der Turbine sind bereits dem Fachmann bekannte Maßnahmen zur Beeinflussung des Ladedruckes. Die Ansteuerung der Stellgliedes 20 durch die Motorsteuerung 70 kann durch eine Regelung in dem Fachmann bekannter Weise erfolgen, bei der beispielsweise ein Istwert des Ladedruckes einem vorgegebenen Sollwert nachgeführt wird. Der Istwert des Ladedruckes kann bspw. durch einen Figur 1 nicht dargestellten Ladedrucksensor in dem dem Verdichter 10 in Strömungsrichtung der Frischluft nachfolgenden Abschnitt der Luftzufuhr 35 erfasst und der Motorsteuerung 70 zugeführt werden. Der Istwert des Ladedruckes kann aber auch aus anderen Betriebsgrößen der Brennkraftmaschine 1, wie beispielsweise dem Luftmassenstrom der dem Ottomotor 45 zugeführten Frischluft und der Drehzahl des Ottomotors 45, in dem Fachmann bekannter Weise modelliert werden. Der Luftmassenstrom wiederum kann bspw. durch einen in Figur 1 nicht dargestellten Luftmassenmesser in der Luftzufuhr 35 erfasst und der Motorsteuerung 70 mitgeteilt werden. Der Luftmassenstrom kann aber auch in dem Fachmann bekannter Weise aus anderen Betriebsgrößen der Brennkraftmaschine 1 in dem Fachmann bekannter Weise modelliert werden. Diese Modellierung kann bspw. mittels der in der Motorsteuerung 70 bekannten eingespritzten Kraftstoffmenge und einem mittels einer in Figur 1 nicht dargestellten Lambdasonde im Abgasstrang 65 zwischen dem Ottomotor 45 und der Turbine 5 gemessenen und an die Motorsteuerung 70 weitergeleiteten Lambdawert in dem Fachmann bekannter Weise erfolgen. Der Sollwert für den Ladedruck kann bspw. in dem Fachmann bekannter Weise abhängig vom aktuellen Betriebspunkt, der durch die Drehzahl des Ottomotors 45 und die durch die Kraftstoffeinspritzmenge charakterisierte Motorlast definiert ist, vorgegeben sein. Ferner kann zusätzlich oder alternativ zu einer solchen Ladedruckregelung eine stationäre Vorsteuerung durch die Motorsteuerung 70 vorgesehen sein, die das Stellglied 20 unmittelbar in Abhängigkeit des aktuellen Betriebspunktes zur Umsetzung des zugeordneten Sollwertes für den Ladedruck ansteuert, sodass dieser schneller als bei einer Ladedruckregelung eingestellt werden kann. Wird sowohl die Ladedruckregelung als auch die stationäre Vorsteuerung vorgesehen, so lässt sich zum einen der dem aktuellen Betriebspunkt der Brennkraftmaschine 1 zugeordnete Sollwert für den Ladedruck schneller umsetzen als bei einer reinen Ladedruckregelung und nachfolgende Schwingungen bzw. Schwankungen des Istwertes des Ladedruckes ausregeln, sodass der Istwert für den Ladedruck möglichst konstant auf dem vorgesehenen Sollwert gehalten werden kann.

Die Regelung des Ladedruckes erfolgt in dem hier beschriebenen Beispiel durch die Verstellung der Leitschaufeln in der Turbine 5 und damit durch die Veränderung der Turbinengeometrie mittels des Stellgliedes 20. Die dadurch veränderte Drehzahl der Welle 15 erzeugt auf der Seite des Verdichters 10 und damit in der Luftzufuhr 35 in Strömungsrichtung der Frischluft dem Verdichter 10 nachfolgend einen höheren oder niedrigeren Ladedruck. Da ein Ladedruckregler in der Dynamik i. d. R. wie beschrieben nicht das optimale Leistungspotenzial liefert, kann der Ladedruckaufbau und damit das Ansprechverhalten des Abgasturboladers und damit das Ansprechverhalten der Brennkraftmaschine 1 durch eine geeignete Vorgabe des Ansteuersignals der Stellgliedes 20, das i. d. R. durch ein pulsweitenmoduliertes Signal gebildet wird und durch ein entsprechendes Tastverhältnis eingestellt wird, wesentlich verbessert werden. In diesem Sinne wirkt die oben beschriebene stationäre Vorsteuerung. Dennoch wirkt auch eine solche stationäre Vorsteuerung noch nicht optimal auf das Ansprechverhalten des Abgasturboladers.

Erfindungsgemäß ist es deshalb vorgesehen, den Verlauf des Ansteuersignals zur Ansteuerung des Stellgliedes 20 abhängig von der Zeit vorzugeben. Dabei kann der zeitliche Verlauf des Ansteuersignals abhängig von einem Betriebspunkt der Brennkraftmaschine 1 vorgegeben werden. Der Betriebspunkt ist dabei wie beschrieben beispielsweise durch die Drehzahl des Ottomotors 45 und die Motorlast gekennzeichnet, wobei die Motorlast beispielsweise durch die in der Motorsteuerung 70 bekannte Kraftstoffeinspritzmenge charakterisiert sein kann. Somit kann bspw. an einem Motorprüfstand oder in einem Probebetrieb des Fahrzeugs abhängig vom Betriebspunkt der Brennkraftmaschine 1 über eine Kennlinie oder ein Kennfeld das Ansteuersignal der Stellgliedes 20 in Abhängigkeit der Zeit vorgegeben werden. Die Vorgabe kann dabei beispielsweise derart erfolgen, dass ein optimaler Ladedruckaufbau erreicht wird. Die Optimierung des Ladedruckaufbaus kann dabei besonders zur Erzielung eines möglichst schnellen Ansprechverhaltens des Abgasturboladers und damit der Brennkraftmaschine erfolgen. Bei der Optimierung des Ladedruckaufbaus kann zusätzlich der Schutz von Motorbauteilen berücksichtigt werden, insbesondere um Laderpumpen zu verhindern. Weiterhin können Gesichtspunkte der Fahrbarkeit des Fahrzeugs bei der Optimierung des Ladedruckaufbaus berücksichtigt werden, um das Ansprechverhalten des Abgasturboladers und damit der Brennkraftmaschine auch für den Fahrer des Fahrzeugs möglichst komfortabel und beispielsweise nicht ruckartig zu gestalten. Die Verwendung einer Kennlinie ist dann von Vorteil, wenn der Betriebspunkt der Brennkraftmaschine 1 nur durch eine einzige Betriebsgröße definiert sein soll, beispielsweise durch die Motordrehzahl. Bei mehr als einer Betriebsgröße zur Definition des aktuellen Betriebspunktes der Brennkraftmaschine 1 ist ein Kennfeld erforderlich. Dabei können neben der Drehzahl des Ottomotors 45 und der Motorlast noch weitere Betriebsgrößen zur Charakterisierung des aktuellen Betriebspunktes der Brennkraftmaschine 1 herangezogen werden. So beispielsweise auch der für eine aktuelle Motordrehzahl, d. h. Drehzahl des Ottomotors 45, und eine aktuelle Motorlast einzustellende Sollwert für den Ladedruck.

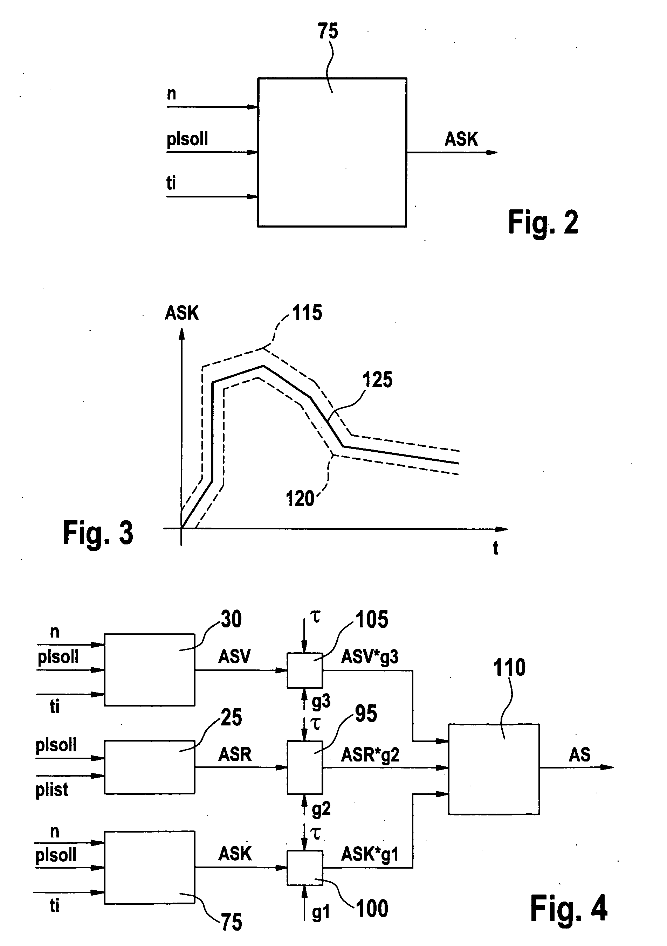

In Figur 2 ist in Form eines Blockschaltbildes ein solches Kennfeld 75 zur betriebspunktabhängigen Ermittlung des Ansteuersignals ASK zur Ansteuerung der Stellgliedes 20 dargestellt. Als den aktuellen Betriebspunkt der Brennkraftmaschine 1 charakterisierende Betriebsgrößen sind dabei die Motordrehzahl n, die durch die Kraftstoffeinspritzmenge charakterisierte Motorlast und der Sollwert plsoll für den Ladedruck vorgesehen. Die Kraftstoffeinspritzmenge ist dabei in Figur 2 durch die Dauer ti der Kraftstoffeinspritzung pro Einspritzvorgang bestimmt.

In Figur 3 ist ein Beispiel für einen zeitlichen Verlauf des Ansteuersignals ASK zur Ansteuerung der Stellgliedes 20 dargestellt. Dabei kennzeichnet 125 einen beispielhaften zeitlichen Verlauf des Ansteuersignals ASK. Dieser zeitliche Verlauf weist zunächst einen relativ steilen Anstieg auf, um dann mit der Zeit weniger steil auf einen Wert größer Null abzufallen. Ein solcher zeitlicher Verlauf des Ansteuersignals ASK ist beispielsweise für einen Betriebspunkt der Brennkraftmaschine 1 im Kennfeld 75 abgelegt, der einem Anfahrbetriebszustand der Brennkraftmaschine 1 entspricht, bei dem üblicherweise der vom Abgasturbolader aufzubauende Ladedruck nur verzögert bereitgestellt werden kann (so genanntes Turboloch). Durch Ansteuerung des Stellgliedes 20 mit dem Ansteuersignal ASK gemäß dem zeitlichen Verlauf 125 nach Figur 3 lässt sich durch den zunächst relativ steilen Anstieg das Turboloch schneller überwinden. Auf diese Weise wird das Ansprechverhalten des Abgasturboladers und damit der Brennkraftmaschine 1 erheblich beschleunigt. Durch die Vorgabe des zeitlichen Verlaufs des Ansteuersignals ASK zur Ansteuerung des Stellgliedes 20 lässt sich somit eine dynamische Vorsteuerung realisieren, die den Ladedruckaufbau besonders in dynamischen Betriebsituationen der Brennkraftmaschine 1, wie beispielsweise einem Anfahrbetriebszustand oder einem Betriebszustand schneller Lastwechsel wie z. B. bei einer Beschleunigung des Fahrzeugs, über den mittels der Ladedruckregelung und/oder der stationären Vorsteuerung erzielbaren Ladedruckaufbau noch weiter verbessert bzw. optimiert.

Gemäß einer ersten Ausführungsform der Erfindung kann es vorgesehen sein, dass das Stellglied 20 ausschließlich von dem mittels dem Kennfeld 75 gebildeten Ansteuersignal ASK angesteuert wird. Dabei liefert das Kennfeld 75 für viele verschiedene Betriebspunkte der Brennkraftmaschine 1 jeweils einen applizierten zeitlichen Verlauf des Ansteuersignals ASK. Je nach aktuellem Betriebspunkt der Brennkraftmaschine 1 wird der zugehörige zeitliche Verlauf des Ansteuersignals ASK aus dem Kennfeld 75 ausgelesen und zur Ansteuerung der Stellgliedes 20 verwendet. Bei einem aktuellen Betriebspunkt der Brennkraftmaschine 1, dem kein zeitlicher Verlauf im Kennfeld 75 zugeordnet ist, kann durch Interpolation unter Betrachtung benachbarter Betriebspunkte mit deren jeweils zugeordnetem zeitlichen Verlauf des Ansteuersignals ASK ein geeigneter zeitlicher Verlauf des Ansteuersignals ASK ermittelt und zur Ansteuerung des Stellgliedes 20 verwendet werden. Auf diese Weise lässt sich für jeden Betriebspunkt der Brennkraftmaschine 1 ein geeigneter zeitlicher Verlauf des Ansteuersignals ASK für das Stellglied 20 ermitteln und ein entsprechend optimaler zeitlicher Verlauf des Ladedruckes realisieren. Das Kennfeld 75 ist in der Motorsteuerung 70 abgelegt.

Gemäß einer zweiten Ausführungsform nach Figur 4 wird das Ansteuersignal ASK des Kennfeldes 75 zusätzlich zu einer Ladedruckregelung und einer stationären Vorsteuerung verwendet.

Figur 4 zeigt ein Funktionsdiagramm. Dabei kennzeichnen gleiche Bezugszeichen gleiche Elemente wie in Figur 2. Das Funktionsdiagramm nach Figur 4 kann software- und/oder hardwaremäßig in der Motorsteuerung 70 implementiert sein. Dabei wird das vom Kennfeld 75 erzeugte Ansteuersignal ASK einem ersten Multiplikationsglied 100 zugeführt. Im ersten Multiplikationsglied 100 wird das Ansteuersignal ASK mit einem ersten Gewichtungsfaktor g1 multipliziert. Das entstehende Produkt ASK*g1 wird einem Summationsglied 110 zugeführt. Das Ansteuersignal ASK des Kennfeldes 75 wird im Folgenden zu Unterscheidungszwecken als erstes Ansteuersignal bezeichnet. Ferner ist gemäß dem Funktionsdiagramm nach Figur 4 eine Ladedruckregelung 25 vorgesehen, der der Sollwert plsoll für den Ladedruck und der Istwert plist für den Ladedruck als Eingangsgrößen zugeführt sind. Die Ladedruckregelung 25 erzeugt dann ein zweites Ansteuersignal ASR derart, dass der Istwert plist des Ladedruckes an den Sollwert plsoll des Ladedruckes angenähert wird. Das zweite Ansteuersignal ASR wird dann in einem zweiten Multiplikationsglied 95 mit einem zweiten Gewichtungsfaktor g2 multipliziert. Das entstehende Produkt ASR*g2 wird dem Summationsglied 110 zugeführt. Ferner ist eine stationäre Vorsteuerung 30 vorgesehen, die ebenfalls als Kennfeld ausgebildet sein kann und der in diesem Beispiel ebenfalls die Motordrehzahl n, der Sollwert plsoll des Ladedruckes und die Motorlast in Form der Dauer ti der Kraftstoffeinspritzung pro Einspritzvorgang zugeführt sind. Im Gegensatz zur dynamischen Vorsteuerung mittels dem Kennfeld 75 bestimmt die stationäre Vorsteuerung mittels dem Kennfeld 30 abhängig vom Betriebspunkt der Brennkraftmaschine 1 ein stationäres, d. h. zeitlich unabhängiges Ansteuersignal ASV. Das Kennfeld 30 der stationären Vorsteuerung kann bspw. ebenfalls auf einem Prüfstand oder in Fahrversuchen geeignet und in dem Fachmann bekannter Weise appliziert werden. Das resultierende Ansteuersignal ASV wird im Folgenden auch als drittes Ansteuersignal bezeichnet und in einem dritten Multiplikationsglied 105 mit einem dritten Gewichtungsfaktor g3 multipliziert. Das entstehende Produkt ASV*g3 wird ebenfalls dem Summationsglied 110 zugeführt. Im Summationsglied 110 werden die Ausgänge der drei Multiplikationsglieder 95, 100, 105 additiv überlagert. Dabei ergibt sich dann das resultierende Ansteuersignal AS, mit dem das Stellglied 20 letztlich angesteuert wird. Die Gewichtung mit den Gewichtungsfaktoren g1, g2, g3 ist optional vorgesehen und kann alternativ auch weggelassen werden, d. h. die Gewichtungsfaktoren g1, g2, g3 würden im letzteren Falle alle gleich 1/3 gewählt werden, sodass sich eine Gleichgewichtung ergäbe. Durch die Gewichtung lässt sich der Ladedruckaufbau mit Hilfe des resultierenden Ansteuersignals AS jedoch differenzierter realisieren, wobei die Gewichtungsfaktoren g1, g2, g3 ebenfalls abhängig vom aktuellen Betriebspunkt der Brennkraftmaschine 1 aus jeweils einem Kennfeld ermittelt werden können, wobei diese Kennfelder ebenfalls bspw. auf einem Prüfstand oder in Fahrversuchen appliziert werden können und der Übersichtlichkeit halber in Figur 4 nicht dargestellt sind. So kann bspw. in einem Anfahrbetriebszustand die dynamische Vorsteuerung durch den ersten Gewichtungsfaktor g1 stärker gewichtet werden als die Ladedruckregelung und die stationäre Vorsteuerung, um ein möglichst schnelles Ansprechen des Abgasturboladers zu erreichen. In einem stationären Betriebszustand der Brennkraftmaschine 1 hingegen kann die dynamische Vorsteuerung durch den ersten Gewichtungsfaktor g1 schwächer gewichtet werden als Ladedruckregelung und die stationäre Vorsteuerung, da ist auf ein schnelles Ansprechverhalten nicht ankommt. Auch die betriebspunktabhängige Einstellung der Gewichtungsfaktoren g1, g2, g3 ist optional und nicht zwingend vorgesehen. Weiterhin und wie in Figur 4 angedeutet kann es optional vorgesehen sein, die Gewichtungsfaktoren g1, g2, g3 einer zeitlichen Änderung zu unterwerfen. Wenn auch die Gewichtungsfaktoren g1, g2, g3 einen zeitabhängigen Verlauf aufweisen, lässt sich der Ladedruckaufbau noch differenzierter realisieren. Die Zeitabhängigkeit der einzelnen Gewichtungsfaktoren g1, g2, g3 ist in Figur 4 durch die Einflussgröße τ gekennzeichnet. Dabei kann jeder Gewichtungsfaktor g1, g2, g3 eine unterschiedliche Zeitabhängigkeit aufweisen. Die Zeitabhängigkeit der einzelnen Gewichtungsfaktoren g1, g2, g3 kann ebenfalls abhängig vom Betriebspunkt der Brennkraftmaschine 1 gewählt und bspw. mittels jeweils eines Kennfeldes vorgegeben werden. Die entsprechenden Kennfelder sind der Übersichtlichkeit halber in Figur 4 ebenfalls nicht dargestellt. So kann es beispielsweise in einem Anfahrbetriebszustand vorgesehen sein, dass die dynamische Vorsteuerung durch den ersten Gewichtungsfaktor g1 zunächst stärker und mit zunehmender Zeit schwächer gewichtet wird. Auf diese Weise lässt sich die dynamische Vorsteuerung auch während des Anfahrbetriebszustandes in ihrer Gewichtung variieren, sodass bei einer zunächst stärkeren Gewichtung das Ansprechverhalten des Abgasturboladers während des Anfahrbetriebszustandes verbessert wird, während im weiteren Verlauf des Anfahrbetriebszustandes die Ladedruckregelung und die stationäre Vorsteuerung im Vergleich zur dynamischen Vorsteuerung stärker gewichtet werden, um das Einschwingen des Abgasturboladers zu stabilisieren.

Gemäß dem oben beschriebenen ersten Ausführungsbeispiel nach Figur 4 ist zusätzlich zur dynamischen Vorsteuerung die Ladedruckregelung 25 und die stationäre Vorsteuerung 30 vorgesehen. Alternativ kann es jedoch auch vorgesehen sein, dass zusätzlich zur dynamischen Vorsteuerung mittels des Kennfeldes 75 nur die Ladedruckregelung 25 in der beschriebenen Weise oder nur die stationäre Vorsteuerung mittels des Kennfeldes 30 in der beschriebenen Weise vorgesehen ist. Weiterhin kann es alternativ zur oben beschriebenen ersten Ausführungsform nach Figur 4 vorgesehen sein, dass nur ein Teil der Gewichtungsfaktoren g1, g2, g3 betriebspunktabhängig vorgegeben.ist. Weiterhin kann es alternativ zur oben beschriebenen ersten Ausführungsform nach Figur 4 vorgesehen sein, dass nur ein Teil der Gewichtungsfaktoren g1, g2, g3 zeitabhängig vorgegeben ist. Weiterhin kann es alternativ zur oben beschriebenen ersten Ausführungsform nach Figur 4 vorgesehen sein, dass die Zeitabhängigkeit der Gewichtungsfaktoren g1, g2, g3 oder einzelner der drei Gewichtungsfaktoren g1, g2, g3 nicht betriebspunktabhängig vorgegeben ist.

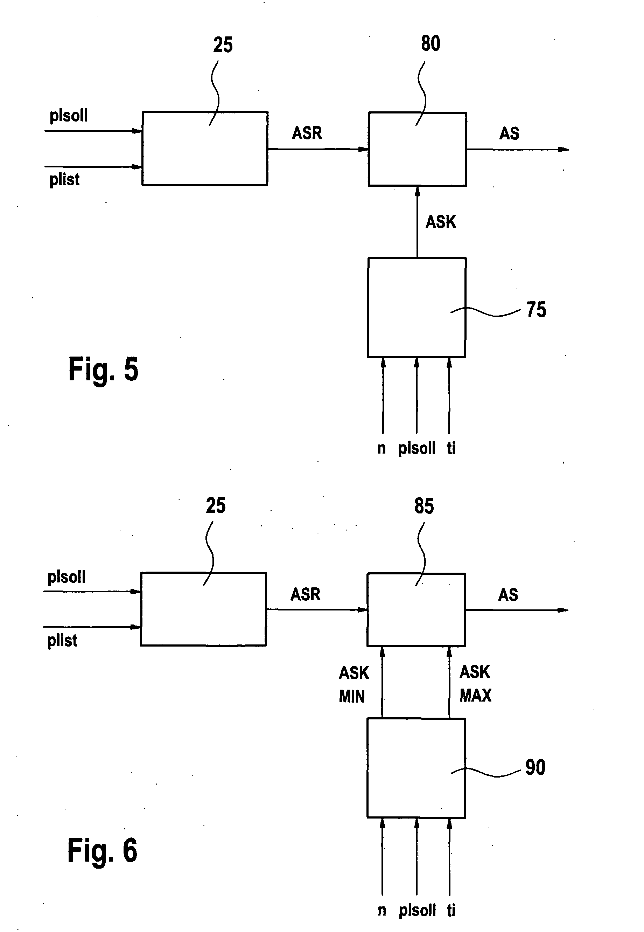

In Figur 5 ist ein Funktionsdiagramm einer zweiten Ausführungsform der Erfindung dargestellt. Auch das Funktionsdiagramm gemäß Figur 5 kann software- und/oder hardwaremäßig in der Motorsteuerung 70 implementiert sein. Gemäß dem Funktionsdiagramm nach Figur 5, in dem gleiche Bezugszeichen gleiche Elemente kennzeichnen wie in den vorherigen Figuren, ist wiederum die Ladedruckregelung 25 vorgesehen, die das oben beschriebene zweite Ansteuersignal ASR im Sinne einer betragsmäßigen Minimierung der Differenz zwischen dem Sollwert plsoll des Ladedruckes und dem Istwert plist des Ladedruckes erzeugt. Das zweite Ansteuersignal ASR wird einem ersten Begrenzer 80 zugeführt. Dem ersten Begrenzer 80 wird außerdem das erste Ansteuersignal ASK als Ausgangssignal des Kennfeldes 75 der dynamischen Vorsteuerung, das in Abhängigkeit des Betriebspunktes der Brennkraftmaschine 1, der in dem zweiten Ausführungsbeispiel nach Figur 5 ebenfalls durch die Motordrehzahl n, den Sollwert p1soll des Ladedruckes und die Motorlast, charakterisiert durch die Dauer ti der Kraftstoffeinspritzung pro Einspritzvorgang, definiert wird, gebildet wird, zugeführt. Das erste Ansteuersignal ASK weist dabei je nach Betriebspunkt bspw. den zeitlichen Verlauf 125 gemäß Figur 3 auf. Somit wird das zweite Ansteuersignal ASR der Ladedruckregelung 25 durch das erste Ansteuersignal ASK des Kennfeldes 75 im ersten Begrenzer 80 begrenzt. Dabei kann das zweite Ansteuersignal ASR in diesem Beispiel durch das erste Ansteuersignal ASK nach oben begrenzt sein, um unerwünschtes Laderpumpen zu vermeiden. Somit entspricht das resultierende Ansteuersignal AS am Ausgang des ersten Begrenzers 80 dem zweiten Ansteuersignal ASR, wenn dieses kleiner oder gleich dem ersten Ansteuersignal ASK ist, und ansonsten dem ersten Ansteuersignal ASK. Auf diese Weise wird das zweite Ansteuersignal ASR als Ausgangssignal der Ladedruckregelung 25 vom zeitlichen Verlauf des ersten Ansteuersignals ASK beeinflusst und zwar in dieser Ausführungsform beschränkend bzw. begrenzend.

In Figur 6 ist ein Funktionsdiagramm einer dritten Ausführungsform der Erfindung dargestellt. Auch das Funktionsdiagramm gemäß Figur 6 kann software- und/oder hardwaremäßig in der Motorsteuerung 70 implementiert sein. Gemäß dem Funktionsdiagramm nach Figur 6, in dem gleiche Bezugszeichen gleiche Elemente kennzeichnen wie in den vorherigen Figuren, ist wiederum die Ladedruckregelung 25 vorgesehen, die das oben beschriebene zweite Ansteuersignal ASR im Sinne einer betragsmäßigen Minimierung der Differenz zwischen dem Sollwert plsoll des Ladedruckes und dem Istwert plist des Ladedruckes erzeugt. Das zweite Ansteuersignal ASR wird einem zweiten Begrenzer 85 zugeführt. Dem zweiten Begrenzer 85 wird außerdem ein Minimalwert ASKMIN und ein Maximalwert ASKMAX jeweils von einem dritten Kennfeld 90 zugeführt. Das dritte Kennfeld 90 liefert abhängig vom Betriebspunkt der Brennkraftmaschine 1, in diesem Beispiel definiert durch die Motordrehzahl n, den Sollwert plsoll des Ladedruckes und die Motorlast, charakterisiert durch die Dauer ti der Kraftstoffeinspritzung pro Einspritzvorgang, einen maximalen zeitlichen Verlauf 115 und einen minimalen zeitlichen Verlauf 120 für das Ansteuersignal des Stellgliedes 20. Der maximale zeitliche Verlauf 115 und der minimale zeitliche Verlauf 120 definieren dabei einen zulässigen Bereich für den zeitlichen Verlauf des Ansteuersignals des Stellgliedes 20 um einen optimalen zeitlichen Verlauf herum, der dem oben beschriebenen ersten Ansteuersignal ASK entspricht und in Figur 3 mit dem Bezugszeichen 125 gekennzeichnet ist. Insofern kann das dritte Kennfeld 90 analog dem ersten Kennfeld 75 für die dynamische Vorsteuerung appliziert werden, indem ausgehend vom optimalen zeitlichen Verlauf 125 der maximale zeitliche Verlauf 115 und der minimale zeitliche Verlauf 120 gebildet werden. Dabei kann der Abstand des maximalen zeitlichen Verlaufs 115 vom optimalen zeitlichen Verlauf 125 und der Abstand des minimalen zeitlichen Verlaufs 120 vom optimalen zeitlichen Verlauf 125 jeweils betriebspunktabhängig , also in diesem Beispiel wiederum abhängig von der Motordrehzahl n, dem Sollwert plsoll des Ladedruckes und der Motorlast, charakterisiert durch die Dauer ti der Kraftstoffeinspritzung pro Einspritzvorgang, ermittelt und im dritten Kennfeld 90 abgelegt werden. Alternativ kann es vorgesehen sein, den Abstand des maximalen zeitlichen Verlaufs 115 vom optimalen zeitlichen Verlauf 125 und/oder den Abstand des minimalen zeitlichen Verlaufs 120 vom optimalen zeitlichen Verlauf 125 jeweils fest vorzugeben. Der Minimalwert ASKMIN entspricht somit dem minimalen zeitlichen Verlauf 120 und der Maximalwert ASKMAX entspricht der maximalen zeitlichen Verlauf 115. Durch den minimalen zeitlichen Verlauf 120 und den maximalen zeitlichen Verlauf 115 wird nun das zweite Ansteuersignal ASR als Ausgangssignal der Ladedruckregelung 25 vom zweiten Begrenzer 85 begrenzt. Das bedeutet, dass das resultierende Ansteuersignal AS am Ausgang des zweiten Begrenzers 85 dem zweiten Ansteuersignal ASR entspricht, wenn das zweite Ansteuersignal ASR größer oder gleich dem minimalen zeitlichen Verlauf 120 und kleiner oder gleich dem maximalen zeitlichen Verlauf 115 im aktuellen Betriebspunkt der Brennkraftmaschine 1 ist. Liegt hingegen das zweite Ansteuersignal ASR unterhalb des minimalen zeitlichen Verlaufs 120 im aktuellen Betriebspunkt der Brennkraftmaschine 1, so entspricht das resultierende Ansteuersignal AS zur Ansteuerung des Stellgliedes 20 dem minimalen zeitlichen Verlauf 120. Liegt hingegen das zweite Ansteuersignal ASR oberhalb des maximalen zeitlichen Verlaufs 115 im aktuellen Betriebspunkt der Brennkraftmaschine 1, so entspricht das resultierende Ansteuersignal AS zur Ansteuerung des Stellgliedes 20 dem maximalen zeitlichen Verlauf 115. Somit wird sichergestellt, dass das resultierende Ansteuersignal AS in dem aktuellen Betriebspunkt der Brennkraftmaschine 1 innerhalb des durch den minimalen zeitlichen Verlauf 120 und den maximalen zeitlichen Verlauf 115 definierten Bereich um den optimalen zeitlichen Verlauf 125 liegt. Dies gewährleistet ebenfalls einen weitgehend optimalen Ladedruckaufbau.

Der optimale zeitlichen Verlauf 125 für das Ansteuersignal des Stellgliedes 20 kann auf einem Motorprüfstand oder in Fahrversuchen dadurch ermittelt werden, dass im aktuellen Betriebspunkt der Brennkraftmaschine 1 der Istwert für einen Wirkungsgrad des Abgasturboladers möglichst nahe an ein experimentell ermitteltes Optimum gebracht wird. Bei der experimentellen Optimierung des Wirkungsgrades des Abgasturboladers sind dabei unter anderem der aufgestaute Abgasgegendruck in Strömungsrichtung des Abgases vor und hinter der Turbine 5, der Abgasmassenstrom, die Drehzahl der Welle 15 und die Abgastemperatur zu berücksichtigen. Diese Größen beeinflussen nämlich den Wirkungsgrad des Abgasturboladers wesentlich.

Das erfindungsgemäße Verfahren kann bspw. für reine Versuchszwecke verwendet werden, beispielsweise um die Wirkungsweise eines Abgasturboladers mit variabler Turbinengeometrie, dessen Auslegung bzw. Dimensionierung und dessen Rückwirkung auf den Ottomotor 45 zu untersuchen. Das erfindungsgemäße Verfahren kann weiterhin dazu verwendet werden, die während der Applikation ermittelten optimalen zeitlichen Verläufe des Ansteuersignals des Stellgliedes 20 bspw. gemäß einer der beschriebenen Ausführungsformen betriebspunktabhängig im Rahmen der dynamischen Vorsteuerung zur Ansteuerung des Stellgliedes 20 zu verwenden. Die Ansteuerung des Stellgliedes 20 kann dabei bspw. mittels eines zur Umsetzung des resultierenden Ansteuersignals geeignet gewählten Ansteuertastverhältnisses erfolgen. Dabei kann es auch vorgesehen sein, anstelle der optimalen zeitlichen Verläufe des Ansteuersignals in den Kennfeldern 75, 90 das jeweils geeignete zugeordnete Ansteuertastverhältnis abzulegen und bei Bedarf je nach Betriebspunkt der Brennkraftmaschine 1 zur Ansteuerung des Stellgliedes 20 abzurufen und zu verwenden.

Es kann weiterhin vorgesehen sein, dass die beschriebene dynamische Vorsteuerung nur in bestimmten Betriebsbereichen oder Bereichen der Motorlast der Brennkraftmaschine 1 zum Einsatz kommen sollen und nicht wie oben beschrieben prinzipiell in sämtlichen möglichen Betriebspunkten der Brennkraftmaschine 1. Somit muss für die Anwendung der dynamischen Vorsteuerung zunächst geprüft werden, ob die Brennkraftmaschine 1 in einem Betriebsbereich betrieben wird, in dem die dynamische Vorsteuerung zulässig ist. Ist dies der Fall, so wird die dynamische Vorsteuerung beispielsweise im Rahmen eines der oben beschriebenen Ausführungsbeispiele aktiviert, andernfalls wird der Ladedruck unabhängig von der dynamischen Vorsteuerung beispielsweise mittels der Ladedruckregelung und/oder der stationären Vorsteuerung in herkömmlicher Weise eingestellt. Die Aktivierung der dynamischen Vorsteuerung kann im Falle der ersten Ausführungsformen beispielsweise dadurch erfolgen, dass der erste Gewichtungsfaktor g1 ungleich Null gewählt wird. Im Falle des zweiten Ausführungsbeispiels nach Figur 5 und des dritten Ausführungsbeispiels nach Figur 6 kann die Aktivierung der dynamischen Vorsteuerung zur Begrenzung des Ausgangssignals der Ladedruckregelung 25 beispielsweise durch Umschalten eines unendlich hohen bzw. eines unendlich kleinen Grenzwertes auf den Ausgang des ersten Kennfeldes 75 bzw. die Ausgänge des dritten Kennfeldes 90 erfolgen. Diese Umschaltung erfolgt dann im ersten Begrenzer 80 bzw. im zweiten Begrenzer 85 software- oder hardwaremäßig. Für die Deaktivierung der dynamischen Vorsteuerung in Betriebsbereichen der Brennkraftmaschine 1, in denen die dynamische Vorsteuerung nicht zulässig sein soll, kann bei der ersten Ausführungsform nach Figur 4 beispielsweise der erste Gewichtungsfaktor g1 auf Null gesetzt werden und bei der zweiten Ausführungsform nach Figur 5 und der dritten Ausführungsform nach Figur 6 kann entsprechend auf die unendlich hohen bzw. unendlich kleinen Grenzwerte umgeschaltet werden. Unendliche hohe beziehungsweise unendlich kleine Grenzwerte bedeutet hier das Fehlen einer Begrenzung.

Das erfindungsgemäße Verfahren lässt sich auch auf andere Arten von Brennkraftmaschinen mit Abgasturbolader entsprechend anwenden. So kann es beispielsweise auch für Dieselmotoren angewandt werden. Ebenso lässt es sich in entsprechender Weise beispielsweise auch für Abgasturbolader anwenden, bei denen der Ladedruck mit Hilfe eines Bypassventils in einem Bypass um die Turbine oder um den Verdichter des Abgasturboladers beeinflusst wird.

## Patentansprüche

1. Verfahren zum Betreiben einer Brennkraftmaschine (1) mit einem Abgasturbolader (5, 10, 15), wobei ein Stellglied (20) zur Beeinflussung des von einem Verdichter (10) des Abgasturboladers (5, 10, 15) erzeugten Ladedruckes angesteuert wird, **dadurch gekennzeichnet, dass** das ein Verlauf eines Ansteuersignals zur Ansteuerung des Stellgliedes (20) abhängig von der Zeit vorgegeben wird.

2. Verfahren nach Anspruch 1, **dadurch gekennzeichnet, dass** der zeitliche Verlauf des Ansteuersignals abhängig von einem Betriebspunkt der Brennkraftmaschine (1) vorgegeben wird.

3. Verfahren nach einem der vorherigen Ansprüche, **dadurch gekennzeichnet, dass** das Stellglied (20) direkt durch das Ansteuersignal mit dem vorgegebenen zeitlichen Verlauf angesteuert wird.

4. Verfahren nach Anspruch 1 oder 2, **dadurch gekennzeichnet, dass** das Stellglied (20) vom Ausgangssignal eines Reglers (25), insbesondere zur Regelung des Ladedruckes, angesteuert wird und dass das Ausgangssignal des Reglers (25) durch den zeitlichen Verlauf des Ansteuersignals beeinflusst wird.

5. Verfahren nach Anspruch 4, **dadurch gekennzeichnet, dass** das Ausgangssignal des Reglers (25) durch den zeitlichen Verlauf des Ansteuersignals begrenzt wird.

6. Verfahren nach Anspruch 4 oder 5, **dadurch gekennzeichnet, dass** das Ausgangssignal des Reglers (25) durch einen vorgegebenen Bereich um den zeitlichen Verlauf des Ansteuersignals begrenzt wird.

7. Verfahren nach Anspruch 1 oder 2, **dadurch gekennzeichnet, dass** das Stellglied(20) von dem Ansteuersignal und zusätzlich von dem Ausgangssignal des Reglers (25) und/oder von dem Signal einer Vorsteuerung (30) angesteuert wird.

8. Verfahren nach Anspruch 7, **dadurch gekennzeichnet, dass** das Ansteuersignal und zusätzlich das Ausgangssignal des Reglers (25) und/oder das Signal der Vorsteuerung (30) zum Ansteuern des Stellgliedes (20) überlagert werden.

9. Verfahren nach Anspruch 8, **dadurch gekennzeichnet, dass** die Signale gewichtet überlagert werden.

10. Verfahren nach Anspruch 9, **dadurch gekennzeichnet, dass** die Gewichtung zeitlich verändert wird.
